# EUROPEAN PATENT SPECIFICATION

(11) **EP 2 855 922 B1**
(45) Date of publication and mention of the grant of the patent: **11.07.2018**
(21) Application number: 13726257.2
(22) Date of filing: 21.05.2013
(51) Int. Cl.: F03B 13/26

(54) **UNDERWATER TURBINE ARRAY**
ANORDNUNG VON UNTERWASSERTURBINEN
ENSEMBLE DE TURBINES SOUS-MARINES

(30) Priority: 21.05.2012 GB 201208925
(43) Date of publication of application: 08.04.2015
(73) Proprietor: Tidalstream Limited, Southam, Warwickshire CV47 0HF (GB)
(72) Inventor: TODMAN, Michael Torr, Southam Warwickshire CV47 2BT (GB); ARMSTRONG, Dr. John Richard Carew, London W4 2AF (GB)
(74) Representative: Gray, James
(86) International application number: PCT/GB2013/051316
(87) International publication number: WO 2014/001752

(56) References cited:
- WO-A1-2004/083629
- WO-A1-2005/061887
- WO-A2-2009/004420
- GB-A- 2 447 774
- GB-A- 2 471 874

## Description

This invention relates to an underwater turbine array, and particularly to a fully submerged array having the capability of being brought to the surface for maintenance and repair.

Many configurations of underwater power-generation turbines have been proposed. One kind comprises a submerged turbine array which is tethered to an anchorage on the underwater surface, typically the sea bed, and is sufficiently buoyant to operate in mid-water.

Submerged turbine arrays of this kind are susceptible of a straightforward transition from a submerged (operating) condition to a surface (maintenance) condition, by adjustment of buoyancy.

In a first arrangement the turbine array is pivoted about a substantially horizontal axis with respect to the tether, and by increasing buoyancy thereof can be brought to the surface whilst remaining tethered; a pivot is also provided at the anchorage. The turbine array pivots through about 90° so that the turbine axes moves from the horizontal (operating) condition to a vertical (maintenance) condition, and the turbines can be arranged to be out of the water for convenient access from a service boat or barge. Decreasing buoyancy allows the array to resume the operating condition.

In a second arrangement the turbine array is fixed against pivoting with respect to the tether, but turns through about 180° with respect to the anchorage as buoyancy thereof is increased at one side. The turbines reach a surface maintenance condition, by partial rollover, so that the upstream side of the first arrangement becomes the downstream side of the second arrangement.

Some other similar arrangements have been proposed with a pivoting connection between the tether and the turbine array, for the purpose of moving from a submerged condition to a surface condition whilst remaining tethered to the anchorage. For example rollover may also be achieved by pivoting the array about the tether.

Pitch control of this kind of turbine array is somewhat problematic, and is typically achieved by providing a surface piercing element; however such elements may be an obstruction to shipping for which countermeasures may be required.

Difficulty arises where it is not possible to use a surface piercing element. Providing pitch stability by active adjustment of turbine ballast is a theoretical solution, but is undesirable for reasons of reliability and power consumption. Accordingly, a secondary restraint may be necessary to maintain position of the turbine when fully submerged, in all conditions of stream flow. However a secondary restraint may obstruct movement from the operating to the maintenance conditions, especially for turbine arrays which in the operating condition have turbines at different depths, and/or for arrays with a triangulated tether. Disconnection or adjustment of a secondary restraint for movement between operating and maintenance conditions is undesirable, since it introduces further complication of the underwater structure, with associated difficulties of reliability and maintenance. Additional difficulties arise where turbines of an array have different operating depths.

WO 2004/083629 discloses an undersea power generation apparatus comprises two turbines mounted at either side of a support strut.

GB 2447774 discloses a deep water current turbine installation.

What is required is a turbine array which is stable in the stream flow, yet can be moved from an underwater generating condition to a surface maintenance condition with relative ease.

According to a first aspect of the invention there is provided a mounting for an underwater turbine array, the mounting comprising a frame defining a plurality of turbine mounting axes transverse to a stream flow direction, said mounting axes being vertically spaced in use, said frame having a tether connected to the frame between said axes, said tether being adapted for connection to a primary underwater anchorage, and said mounting being adapted for pivoting about said anchorage between a wholly submerged operating condition and a surface maintenance condition, wherein a rigid fixed length stay is provided from said tether for connection to a secondary anchorage spaced from said primary anchorage, said stay permitting transition between the operating and maintenance conditions.

The tether provides a rigid fixed length connection to a primary anchorage, and may comprise arms extending at an acute angle from an apex substantially at the primary anchorage.

Such a mounting is adapted for transition by pivoting or rollover whilst maintaining both the tether and stay at a fixed length, and without requiring disconnection of either.

In a preferred embodiment the mounting is in use ballasted or otherwise retained at or adjacent the underwater surface. For example a cable or latch may retain the mounting at the sea bed.

In one embodiment the mounting incorporates a means of varying the ballast thereof, for example by altering the volume of sea water in one or more ballast tanks. By suitable arrangement of variable ballast, the frame may be moved progressively between a submerged operating condition and a surface maintenance condition. Ballast may be substantially increased in the operating condition in order to sit the frame on the underwater surface or on a prepared underwater mounting.

In one embodiment the frame is pivotable about a transverse pivoting axis between two of said mounting axes, said pivoting axis passing through the connection of said tether and said frame. The mounting and pivoting axes may be parallel.

The tether may comprise two arms having independent spaced connection to said frame, and converging toward said primary anchorage. The arms may converge at the end for connection to the primary anchorage.

In one embodiment a stay is connected to one of said arms at a distance from the connection to said frame. The stay may be connected to the proximal arm or to the distal arm. By suitable arrangement of the geometry of tether and stay, transition by rollover about a distal connection can substantially maintain the heading of the turbine array in both submerged and surface conditions.

According to a second aspect of the invention, there is provided a method of transitioning an underwater turbine array of the kind mentioned above, between a submerged operating condition and a surface maintenance condition, the method comprising the steps of varying the buoyancy of the frame whilst maintaining connection thereof to said anchorages via said tether and stay.

The method preferably comprises varying buoyancy by adjusting the volume of water in buoyancy tanks of the frame. The method may include the further step of substantially decreasing buoyancy upon reaching the submerged operating condition, so as to firmly bias the array against the underwater surface.

Preferred features of the invention are found in the accompanying claims.

Other features of the invention will be apparent from the following description of preferred embodiments illustrated by way of example only in the accompanying drawings in which:-
Fig. 1 is a schematic side elevation of a multi-row submerged tidal array having operating and maintenance conditions;
Fig. 2 is a schematic perspective view from above of the submerged array of Fig. 1 in a first configuration.
Fig. 3 is a schematic perspective view from above of the submerged array of Fig. 1 in a second configuration.

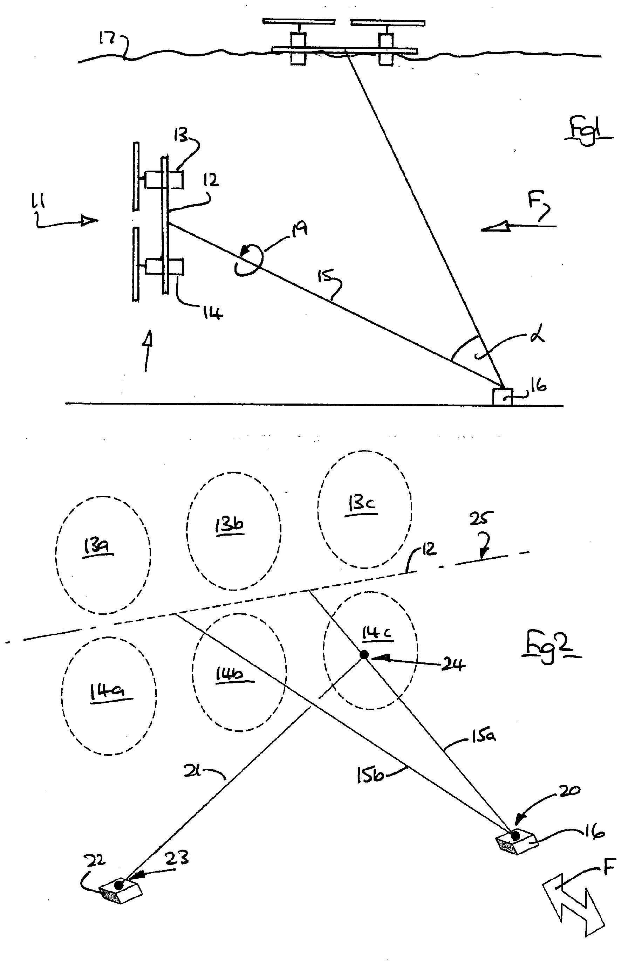

With reference to Fig. 1, a turbine array 11 comprises a frame 12 having an upper turbine 13 and a lower turbine 14 in the submerged operating condition. Stream flow direction is indicated by arrow F. The frame 12 is restrained by a tether 15 to an articulating anchorage 16 on the underwater surface. In use the array floats at or adjacent the underwater surface so as to be substantially below the surface 17, and thus not an obstruction to shipping. The turbines 13, 14 comprise generators, and the electrical output thereof is typically routed by an electrical cable (not shown) via the tether to an underwater interconnector, and thence to a shore station.

The vertical position of the frame 12 in the water may be controlled by adjusting buoyancy thereof, for which conventional adjustable buoyancy tanks may be provided. In particular by increasing buoyancy, the frame may be brought in a controlled manner to a floating maintenance condition (also illustrated) in which the turbines are substantially out of the water. By suitable frame and turbine design, the turbines may be wholly out of the water.

In one method, a pivot 18 is provided between the tether and the frame so that increasing buoyancy moves the tether upwardly from the underwater surface through an angle α.

By suitably disposing the centre of gravity of the frame, water ballast and turbines, and by adjustment of hydrodynamic drag by geometrical arrangement, and by potentially running one or more turbines as thrusters, the floating configuration of Fig. 1 can be assured with the turbine 13 upstream.

In another method increasing buoyancy asymmetrically pivots the frame with respect to the axis of the tether, or the tether may pivot about its axis with respect to the anchorage (arrow 19), to reach the floating condition. This 'rollover' method places the turbine 14 upstream.

It will be observed from Fig. 1 that a yaw restraint is not illustrated and the anchorage permits free movement of the frame downstream thereof so that it aligned with variations in the direction of flow F.

In many cases a yaw restraint is however desirable, particularly where the flow direction is stable.

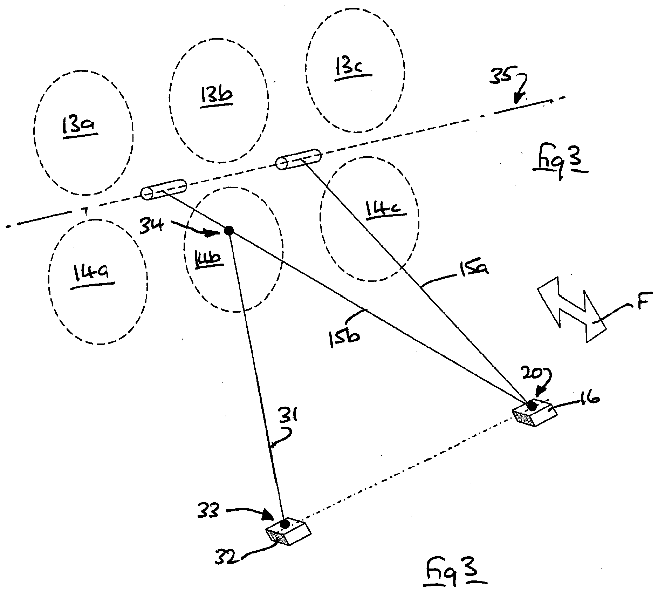

Figs. 2 and 3 illustrates embodiments suitable for the multi-row configuration of Fig. 1.

In Fig. 2, the reference numerals of Fig. 1 are applied to common features. A row of upper turbines 13a-13c and a row of lower turbines 14a-14c are provided on a frame 12, and are illustrated in the operating condition in which the lower part of the frame is at or immediately adjacent the underwater surface. The tether 15 has two straight arms 15a, 15b connected to the frame 12 on an axis between the upper and lower turbines. The tether 15 thus triangulates the structure for strength and rigidity, whilst having a lower apex coupled at a pivot 20 of the anchorage. The pivot 20 may have several necessary degrees of freedom, as will become apparent, and in the illustrated embodiment has three degrees of freedom. The tether, frame and turbines are a substantially symmetrical arrangement. In particular the turbines are arranged such that when working equally there is no substantial yaw about the anchorage 16.

A rigid yaw restraint 21 passes from a second anchorage 22 under a first tether arm 15a for connection to the second tether arm 15b. The second anchorage 22 has a pivot 23 and is substantially to one side of the tether arm, downstream of the main anchorage 16.

The restraint 21 holds the arm 15a (and hence the frame 12) against yaw by triangulation with the anchorages 16 and 22. In one embodiment the restraint 21 may be substantially orthogonal to the arm 15a in plan, or at least substantially orthogonal to the bisector of the arms 15a, 15b. However orthogonal bisection is not a geometrical requirement.

The pivots 20, 23 are universal joints, for example ball or rose joints which individually allow movement in several mutually orthogonal planes. The connection between the restraint 21 and tether arm 15a is also an universal joint 24.

By virtue of the joints 20, 23, 24 the tether arm is adapted to move in the water as buoyancy of the frame is altered in use. The dimensions of the triangle between the joints 20, 23, 24 is selected to allow the turbines to be substantially aligned with the flow direction at the desired operating depth.

In order to move the turbines to the maintenance condition, buoyancy of the frame is increased. In one arrangement the frame pivots about an axis 25 at the upper ends of the tether arms, due to distribution of weight, buoyancy and drag thereof, to lie on the surface with the turbines exposed for maintenance. Buoyancy tanks may be selectively and/or sequentially adjusted to ensure pivoting of the frame in a controlled manner. Turbine rotors may be operated as thrusters to assist movement to the maintenance condition.

In another arrangement the frame rolls about the connection of the frame and tether arm 15a, away from the tether arm 15b, to reach a surface maintenance condition. In an alternative arrangement the connection of frame and tether arm 15a is fixed so that the arm 15 can rotate about the pivot 20 to allow the frame to reach the surface maintenance condition.

In rising to the surface a fixed length restraint may cause the heading of the frame to move arcuately (when viewed in plan); however with precise determination of the geometry, in particular the placement of the anchorage 22, the frame can maintain the same heading. A change of heading may be useful if the direction of stream flow at depth is not the same as the direction of stream flow at the surface.

Fig. 3 discloses an alternative arrangement where a secondary anchorage 32 is aligned with the main anchorage 16 substantially orthogonal to the stream flow direction. A yaw restraint 31 from the anchorage 32 is connected to one of the tether arms, in this case 15b, at a pivot 34 to define an isosceles triangle whose base is formed by the line joining the main and secondary anchorages. In use the arrangement is held at or adjacent the underwater surface in the operating condition.

Movement from the operating condition to the maintenance condition is by simple pivoting about the axis connecting the anchorage pivots 20, 33, the frame 12 pivoting about the axis 35 passing through the ends of the tether arms 15a, 15b.

The arrangements described herein require no length adjustment of the tether or restraint, nor any disconnection of components. The arrangements are thus highly suitable for sub-surface use when manufactured from appropriate materials.

## Claims

1. A mounting for an underwater turbine array (11), the mounting comprising a frame (12) defining a plurality of turbine mounting axes transverse to a stream flow direction (F), said mounting axes being vertically spaced in use, said frame (12) having a tether (15, 15a, 15b) connected to the frame between said axes, said tether (15, 15a, 15b) being adapted for connection to a primary underwater anchorage (16), and said frame (12) being adapted for pivoting about said anchorage (16) between a wholly submerged operating condition and a surface maintenance condition,
wherein a rigid fixed length stay (21, 31) is provided from said tether (15, 15a, 15b) for connection to a secondary anchorage (22, 32) spaced from said primary anchorage (16), said stay (21, 31) permitting transition between the operating and maintenance conditions.

2. A mounting according to claim 1, wherein said frame (12) is pivotable about a transverse pivoting axis (25, 35) between two of said mounting axes, said pivoting axis (25, 35) passing through the connection of said tether (15, 15a, 15b) and said frame (12).

3. A mounting according to claim 1 or claim 2, wherein said mounting and pivoting axes (25, 35) are parallel.

4. A mounting according to any of claims 1-3, wherein said tether (15) comprises two arms (15a, 15b) having independent spaced connection to said frame (12), and converging toward said primary anchorage (16).

5. A mounting according to claim 4, wherein said arms (15a, 15b) converge at the end for connection to the primary anchorage (16).

6. A mounting according to claim 4 or claim 5, wherein said stay (21, 31) is connected to one of said arms (15a, 15b) at a distance from the connection to said frame (12).

7. A mounting according to any of claims 4-6, wherein said stay (21, 31) is connected to a proximal arm (15b).

8. A mounting according to any of claims 4-6, wherein said stay (21, 31) is connected to a distal arm (15a), and in use passes under a proximal arm (15b).

9. A mounting according to claim 8, wherein said stay (21, 31) is substantially orthogonal to said tether (15, 15a, 15b).

10. A mounting according to claim 8 or claim 9, wherein the distal arm (15a) is pivotable about said primary anchorage (16) in use.

11. A mounting according to claim 8 or claim 9, wherein said frame (12) is pivotable about the axis of the tethered arm (15a, 15b), in use.

12. An immersed turbine array (11) comprising a mounting according to any preceding claim, a plurality of turbines (13, 14) on the frame (12), and primary and secondary underwater anchorages (16, 22, 32).

## Patentansprüche

1. Anbringungsvorrichtung für ein Unterwasserturbinen-Array (11), wobei die Anbringungsvorrichtung einen Rahmen (12) aufweist, der mehrere quer zu einer Strömungsfließrichtung (F) verlaufende Turbinenanbringungsachsen definiert, wobei die Anbringungsachsen bei Betrieb mit vertikalem Abstand angeordnet sind, wobei der Rahmen (12) mit einer Stranganordnung (15,15a,15b) versehen ist, die zwischen den Achsen mit dem Rahmen (12) verbunden ist, wobei die Stranganordnung (15,15a,15b) zur Verbindung mit einer Primär-Unterwasserverankerung (16) ausgelegt ist und der Rahmen (12) zur Verschwenkung um die Verankerung (16) zwischen einem vollständig eingetauchten Betriebszustand und einem Oberflächen-Wartungszustand ausgelegt ist,
wobei von der Stranganordnung (15,15a,15b) ausgehend eine starre Strebe (21,31) mit fester Länge zur Verbindung mit einer Sekundär-Verankerung (22,32) vorgesehen ist, welche im Abstand von der Primär-Verankerung (16) angeordnet ist, wobei die Strebe (21,31) einen Übergang zwischen Betriebs- und Wartungszustand ermöglicht.

2. Anbringungsvorrichtung nach Anspruch 1, bei der der Rahmen (12) um eine querverlaufende Schwenkachse (25,35) zwischen zwei der Anbringungsachsen schwenkbar ist, wobei die Schwenkachse (25,35) durch die Verbindung der Stranganordnung (15,15a,15b) und des Rahmens (12) verläuft.

3. Anbringungsvorrichtung nach Anspruch 1 oder Anspruch 2, bei der die Anbringungsvorrichtung und die Schwenkachsen (25,35) parallel sind.

4. Anbringungsvorrichtung nach einem der Ansprüche 1-3, bei der die die Stranganordnung (15) zwei Arme (15a,15b) aufweist, die unabhängige, im Abstand angeordnete Verbindungen mit dem Rahmen (12) aufweisen und zu der Primär-Verankerung (16) hin konvergieren.

5. Anbringungsvorrichtung nach Anspruch 4, bei der die Arme (15a,15b) an dem zur Verbindung mit der Primär-Verankerung (16) vorgesehenen Ende konvergieren.

6. Anbringungsvorrichtung nach Anspruch 4 oder Anspruch 5, bei der die Strebe (21,31) mit einem der Arme (15a,15b) in einem Abstand von der Verbindung mit dem Rahmen (12) verbunden ist.

7. Anbringungsvorrichtung nach einem der Ansprüche 4-6, bei der die Strebe (21,31) an einem proximalen Ende (15b) verbunden ist.

8. Anbringungsvorrichtung nach einem der Ansprüche 4-6, bei der die Strebe (21,31) mit einem distalen Arm (15a) verbunden ist und bei Betrieb unter einem proximalen Arm (15b) hindurchtritt.

9. Anbringungsvorrichtung nach Anspruch 8, bei der die Strebe (21,31) im Wesentlichen senkrecht zu der Stranganordnung (15,15a,15b) verläuft.

10. Anbringungsvorrichtung nach Anspruch 8 oder Anspruch 9, bei der der distale Arm (15a) bei Betrieb um die Primär-Verankerung (16) schwenkbar ist.

11. Anbringungsvorrichtung nach Anspruch 8 oder Anspruch 9, bei der der Rahmen (12) bei Betrieb um die Achse des Stranganordnungs-Arms (15a,15b) schwenkbar ist.

12. Eingetauchtes Turbinen-Array (11) mit einer Anbringungsvorrichtung nach einem der vorhergehenden Ansprüche, mehreren Turbinen (13,14) an dem Rahmen (12) und Primär- und Sekundär-Unterwasserverankerungen (16,22,32).

## Revendications

1. Monture pour un ensemble de turbines sous-marines (11), la monture comprenant un cadre (12) définissant une pluralité d'axes de montage de turbine transversaux à un sens d'écoulement du courant (F), lesdits axes de montage étant verticalement espacés lors de l'utilisation, ledit cadre (12) ayant une amarre (15, 15a, 15b) reliée au cadre entre lesdits axes, ladite amarre (15, 15a, 15b) étant appropriée pour être reliée à un ancrage sous-marin primaire (16), et ledit cadre (12) étant approprié pour pivoter autour dudit ancrage (16) entre un état de fonctionnement totalement immergé et un état de maintenance en surface,
dans laquelle un étai rigide de longueur fixe (21, 31) est fourni à partir de ladite amarre (15, 15a, 15b) pour une liaison à un ancrage secondaire (22, 32) espacé dudit ancrage primaire (16), ledit étai (21, 31) permettant la transition entre les états de fonctionnement et de maintenance.

2. Monture selon la revendication 1, dans laquelle ledit cadre (12) peut pivoter autour d'un axe de pivotement transversal (25, 35) entre deux desdits axes de montage, ledit axe de pivotement (25, 35) passant à travers la liaison de ladite amarre (15, 15a, 15b) et dudit cadre (12).

3. Monture selon la revendication 1 ou 2, dans laquelle ladite monture et les axes de pivotement (25, 35) sont parallèles.

4. Monture selon l'une quelconque des revendications 1 à 3, dans laquelle ladite amarre (15) comprend deux bras (15a, 15b) ayant une liaison espacée indépendante avec ledit cadre (12) et convergeant vers ledit ancrage primaire (16).

5. Monture selon la revendication 4, dans laquelle lesdits bras (15a, 15b) convergent au niveau de l'extrémité pour une liaison à l'ancrage primaire (16).

6. Monture selon la revendication 4 ou 5, dans laquelle ledit étai (21, 31) est relié à l'un desdits bras (15a, 15b) à une distance de la liaison audit cadre (12).

7. Monture selon l'une quelconque des revendications 4 à 6, dans laquelle ledit étai (21, 31) est relié à un bras proximal (15b).

8. Monture selon l'une quelconque des revendications 4 à 6, dans laquelle ledit étai (21, 31) est relié à un bras distal (15a) et, lors de l'utilisation, il passe en dessous d'un bras proximal (15b).

9. Monture selon la revendication 8, dans laquelle ledit étai (21, 31) est sensiblement perpendiculaire à ladite amarre (15, 15a, 15b).

10. Monture selon la revendication 8 ou 9, dans laquelle le bras distal (15a) peut pivoter autour dudit ancrage primaire (16) lors de l'utilisation.

11. Monture selon la revendication 8 ou 9, dans laquelle ledit cadre (12) peut pivoter autour de l'axe du bras d'amarrage (15a, 15b), lors de l'utilisation.

12. Ensemble de turbines immergées (11) comprenant une monture selon l'une quelconque des revendications précédentes, une pluralité de turbines (13, 14) sur le cadre (12), et des ancrages sous-marins primaires et secondaires (16, 22, 32).
